# EUROPEAN PATENT APPLICATION

(11) **EP 4 589 460 A1**
(43) Date of publication of application: **23.07.2025**
(21) Application number: 23865551.8
(22) Date of filing: 13.09.2023
(51) Int. Cl.: G06F 21/62, G06N 20/10

(54) **INFORMATION PROCESSING DEVICE, INFORMATION PROCESSING METHOD, AND COMPUTER PROGRAM**

(30) Priority: 15.09.2022 JP 2022146696
(71) Applicant: Sony Group Corporation, Tokyo 108-0075 (JP)
(72) Inventor: SUZUKI, Kenji, Tokyo 108-0075 (JP)
(74) Representative: 2SPL Patentanwälte PartG mbB
(86) International application number: PCT/JP2023/033316
(87) International publication number: WO 2024/058202

(57) **Abstract**

Provided is an information processing apparatus that performs processing for providing data for which personal information is protected and fairness is secured.

The information processing apparatus includes a data acquisition unit that acquires data, a bias determination unit that detects a bias regarding a data set acquired by the data acquisition unit, and a learned base model that outputs an instruction regarding the bias or outputs an instruction to generate data for alleviating the bias on the basis of a determination result of the bias determination unit. The base model acquires the data for alleviating the bias on the basis of interaction with a user.

## Description

### TECHNICAL FIELD

The technology disclosed in the present specification (hereinafter, referred to as "the present disclosure") relates to an information processing apparatus, an information processing method, and a computer program that perform processing for providing data to be used in, for example, deep learning.

### BACKGROUND ART

In recent years, a deep learning technology has become active in order to implement highly accurate processing using a machine learning model. Deep learning requires a huge amount of learning data. Thus, for example, a learning data collection apparatus that automatically collects learning data to be used for learning of an object detection model has been proposed (see Patent Document 1).

On the other hand, in recent years, starting from the European General Data Protection Regulation (GDPR), a legal system for protecting personal information has been implemented worldwide. The collected learning data may include personal information to be protected. In order to acquire personal information, in principle, the consent of the person himself/herself is required. However, the learning data necessary for deep learning is enormous, and thus, it is not easy to obtain the consent of the person himself/herself.

Furthermore, in recent years, importance has been placed on the ethics of artificial intelligence (AI), and there is an increasing need to secure fairness of a machine learning model. For example, a system that secures fairness of a learned model by performing relearning using learning data padded on the basis of feedback data has been proposed (see Patent Document 2).

### CITATION LIST

### PATENT DOCUMENT

Patent Document 1: Japanese Patent Application Laid-Open No. 2022-38941
Patent Document 2: Japanese Patent Application Laid-Open No. 2021-12593

### NON-PATENT DOCUMENT

Non-Patent Document 1: Y. Viazovetskyi, V. Ivashkin, and E. Kashin, "StyleGAN2 Distillation for Feed-forward Image Manipulation" <URL: https://arxiv.org/abs/2003.03581>

### SUMMARY OF THE INVENTION

### PROBLEMS TO BE SOLVED BY THE INVENTION

An object of the present disclosure is to provide an information processing apparatus, an information processing method, and a computer program that perform processing for providing data which can be used for, for example, deep learning and for which personal information is protected and fairness is secured.

### SOLUTIONS TO PROBLEMS

The present disclosure has been made in view of the above problems, and a first aspect thereof is an information processing apparatus including:
a data acquisition unit that acquires data;
a bias determination unit that detects a bias regarding a data set acquired by the data acquisition unit; and
a learned base model that outputs an instruction regarding the bias or outputs an instruction to generate data for alleviating the bias on the basis of a determination result of the bias determination unit.

The instruction regarding the bias is an instruction by a language. In addition, the base model outputs an instruction to acquire data for alleviating the bias or generate data for alleviating the bias on the basis of a response from a user to the instruction regarding the bias. The base model may change the instruction to acquire the data for alleviating the bias or generate the data regarding the bias on the basis of interaction with the user.

The base model has learned a predetermined law and acquires data for alleviating the bias. Alternatively, the instruction to generate the data for alleviating the bias is output on the basis of the learned law. The predetermined law mentioned here is specifically the Personal Information Protection Act.

Furthermore, a second aspect of the present disclosure is an information processing method including:
a data acquisition step of acquiring data;
a bias determination step of detecting a bias regarding a data set acquired in the data acquisition step; and
a step of outputting an instruction regarding the bias or outputting an instruction to generate data for alleviating the bias by using a learned base model on the basis of a determination result in the bias determination step.

Furthermore, a third aspect of the present disclosure is a computer program described in a computer-readable format such that a computer functions as:
a data acquisition unit that acquires data;
a bias determination unit that detects a bias regarding a data set acquired by the data acquisition unit; and
an output unit that outputs an instruction regarding the bias or outputs an instruction to generate data for alleviating the bias by using a learned base model on the basis of a determination result of the bias determination unit.

The computer program according to the third aspect of the present disclosure defines a computer program described in a computer-readable format so as to implement predetermined processing on a computer. In other words, by installing the computer program according to the third aspect of the present disclosure in the computer, the computer can perform a cooperative operation and produce effects similar to those produced by the information processing apparatus according to the first aspect of the present disclosure.

### EFFECTS OF THE INVENTION

According to the present disclosure, it is possible to provide an information processing apparatus, an information processing method, and a computer program that perform processing for providing data which can be used for, for example, deep learning and for which personal information is protected and fairness is secured.

Note that the effects described in the present specification are merely examples, and the effects to be brought by the present disclosure are not limited thereto. Furthermore, there are cases where the present disclosure further provides some other effects, in addition to the effects described above.

Still other objects, features, and advantages of the present disclosure will become apparent from a more detailed description based on embodiments as described later and the accompanying drawings.

### BRIEF DESCRIPTION OF DRAWINGS

Fig. 1 is a view illustrating a functional configuration of an information processing apparatus 100 according to a first example.
Fig. 2 is a view illustrating a functional configuration example for performing processing of protecting a personal information portion included in image data.
Fig. 3 is a view illustrating another functional configuration example for performing processing of protecting the personal information portion included in the image data.
Fig. 4 is a flowchart indicating processing procedure for the information processing apparatus 100 to transmit data for which personal information is protected to a data server of a third party.
Fig. 5 is a flowchart indicating another processing procedure for the information processing apparatus 100 to transmit data for which personal information is protected to the data server of the third party.
Fig. 6 is a view illustrating a functional configuration of an information processing apparatus 600 according to a second example.
Fig. 7 is a view illustrating a first operation example of an image generation unit 602.
Fig. 8 is a view illustrating a second operation example of the image generation unit 602.
Fig. 9 is a view illustrating the second operation example (an example where a classifier for each element of personal information that requires consideration is used) of the image generation unit 602.
Fig. 10 is a view illustrating the second operation example (an example where a classifier for each element of personal information that requires consideration is used) of the image generation unit 602.
Fig. 11 is a flowchart indicating processing procedure for the information processing apparatus 600 to generate image data by using a base model and transmit the image data to the data server of the third party.
Fig. 12 is a flowchart indicating another processing procedure for the information processing apparatus 600 to generate image data by using the base model and transmit the image data to the data server of the third party.
Fig. 13 is a view illustrating a configuration example of an information processing apparatus 2000.
Fig. 14 is a view illustrating a representative base model after GPT-3.
Fig. 15 is a view illustrating an interface of each base model that handles vision and language.
Fig. 16 is a view illustrating a functional configuration of an information processing apparatus according to a third example.
Fig. 17 is a view illustrating an operation example of an information processing apparatus 1600.
Fig. 18 is a flowchart indicating processing procedure for collecting data in the information processing apparatus 1600.
Fig. 19 is a view illustrating another functional configuration of the information processing apparatus according to the third example.
Fig. 20 is a view illustrating an operation example of an information processing apparatus 1900.
Fig. 21 is a flowchart indicating processing procedure for collecting data in the information processing apparatus 1900.

### MODE FOR CARRYING OUT THE INVENTION

Hereinafter, the present disclosure will be described in the following order with reference to the drawings.

A. Outline
B. First Example
B-1. System Configuration
B-2. Configuration Example (1) of Image Processing Unit
B-3. Configuration Example (2) of Image Processing Unit
B-4. Generation of Another Person Image
B-5. Processing Procedure
C. Second example
C-1. Base Model
C-2. System Configuration
C-3. Operation Example of Image Generation Unit
C-4. Processing Procedure
D. Third Example
D-1. System Configuration (1)
D-2. System Configuration (2)
E. Configuration of Information Processing

### Apparatus

### A. Outline

In principle, handling of personal information requires the consent of the person himself/herself, but it is not realistic to obtain the consent of the person himself/herself for all the enormous learning data necessary for deep learning because operation cost becomes very high. Although a method of protecting personal information by applying blurring processing or mosaic processing to a face image is known, quality of information is deteriorated, and, further, the ethics of AI has recently become important, and thus, it is necessary to collect unbiased learning data in order to secure fairness of a machine learning model.

The present disclosure therefore proposes a technology that provides data which can be used for deep learning and for which personal information is protected and fairness is secured.

As a first example, the present disclosure proposes a technology of converting data acquired or collected by various means into data for which personal information is protected and transmitting the data to a data server of a third party (or distributing the data in other forms).

Furthermore, the present disclosure proposes a technology of automatically generating unbiased data as a second example and a third example. By performing learning using a large amount of unbiased data generated using the technology, it is possible to secure fairness of a machine learning model. The automatically generated data does not include personal information in the first place, and thus, there is no risk of violating the Personal Information Protection Act even if the data is used for various purposes such as deep learning.

Among the personal information, the "personal information including the race, creed, social status, medical history, criminal record, a fact of having suffered damage by a crime, and other statements specified by a cabinet order as those that require special consideration for handling so as not to cause unjust discrimination, prejudice, or other disadvantages to the person himself/herself" is "personal information requiring special consideration" (Paragraph 3, Article 2 of the revised Personal Information Protection Act). Hereinafter, when simply referred to as "personal information", it basically refers to "personal information requiring special consideration".

Note that, in the following description, for convenience, description will be provided assuming that a machine learning model for performing a task regarding image processing such as image classification is a target of learning, and learning data therefor is basically image data.

### B. First Example

In this section B, as a first example of the present disclosure, a technology of converting data acquired or collected by various means into data for which personal information is protected and transmitting the data to a data server of a third party (or distributing the data in other forms) is proposed.

### B-1. System Configuration

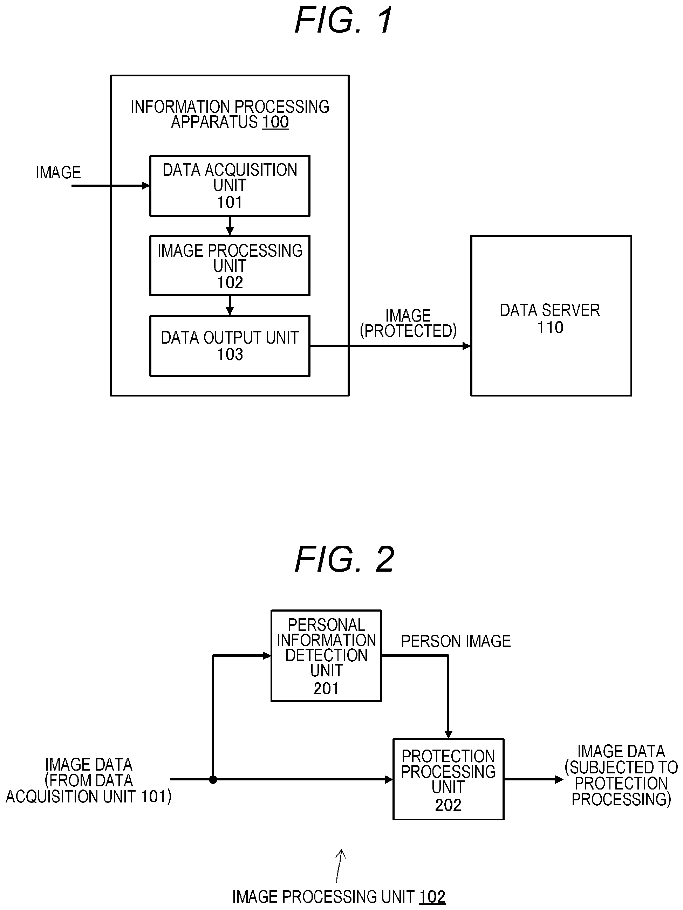

Fig. 1 illustrates a functional configuration of an information processing apparatus 100 according to the present example. The illustrated information processing apparatus 100 includes a data acquisition unit 101, an image processing unit 102, and a data output unit 103.

The data acquisition unit 101 uses various means to acquire image data for use in deep learning. For example, the data acquisition unit 101 (or the information processing apparatus 100) may be installed on a cloud, and the data acquisition unit 101 may collect image data captured by a large number of digital cameras (not illustrated) as edge devices. Alternatively, the data acquisition unit 101 may search or go around a wide area network such as the Internet to collect image data that can be used for deep learning.

The image processing unit 102 performs image processing on each piece of the image data acquired by the data acquisition unit 101. The image processing unit 102 performs processing of conversion into image data for which personal information is protected without losing information mainly by converting a face image included in the image data into a fictitious face by face image conversion, or the like. Of course, the image processing unit 102 may perform other image processing (such as image quality adjustment) on the image data.

The data output unit 103 outputs the image data after the image processing by the image processing unit 102, that is, the image data for which personal information is protected to an apparatus outside the information processing apparatus 100. For example, the data output unit 103 is managed or operated by a third party, and outputs image data to a data server 110 that accumulates learning data for deep learning. Of course, the data output unit 103 may output the data to another data storage.

According to the information processing apparatus 100 according to the present example, the image processing unit 102 performs processing of protecting personal information on the image data acquired by the data acquisition unit 101. Thus, the data output unit 103 can transmit the processed image data to the third party without worrying about the personal information. Further, also in the data server 110 of the third party, the image data provided from the information processing apparatus 100 can be further transmitted to a third party (such as, for example, a learning apparatus that performs deep learning) without worrying about the personal information.

### B-2. Configuration Example (1) of Image Processing Unit

Fig. 2 illustrates a functional configuration example for performing processing of protecting a personal information portion included in image data in the image processing unit 102. In the example illustrated in Fig. 2, the image processing unit 102 is configured to perform processing for converting personal information in image data into data that does not require protection by a personal information detection unit 201 and a protection processing unit 202.

When the personal information detection unit 201 captures the image data acquired by the data acquisition unit 101, the personal information detection unit 201 detects personal information included in the image data. Specifically, the personal information detection unit 201 detects a face image included in the image data by face detection processing. The personal information detection unit 201 may perform processing of detecting personal information such as a face image using a learned model. Then, the protection processing unit 202 performs image processing of converting the personal information included in the original image data so that the personal information cannot be specified, and converts the image data into image data that does not require to worry about the personal information.

The protection processing unit 202 may perform processing of applying blindness, mosaic, or blurring to the face image in the image data as processing for protecting the personal information included in the image data. However, in such simple image processing, attribute information such as race, gender, and age of the original person is missing, and data quality is deteriorated. This results in causing a problem that the image data is not appropriate as learning data for deep learning. Thus, as a more preferable embodiment, the protection processing unit 202 performs face conversion processing of replacing a person image included in the image data with an another person image having the same attribute information as that of the person. In such a case, the information processing apparatus 100 can supply the data for which personal information is protected while maintaining quality without losing attribute information, and the like, so that the data can be provided to a third party as good learning data for deep learning, and the data can be distributed via the third party.

Note that the protection processing unit 202 may use skin color conversion processing for quantifying color of skin of a face portion in addition to the face image conversion so that it becomes unnecessary to handle the race information which is the personal information requiring special consideration.

### B-3. Configuration Example (2) of Image Processing Unit

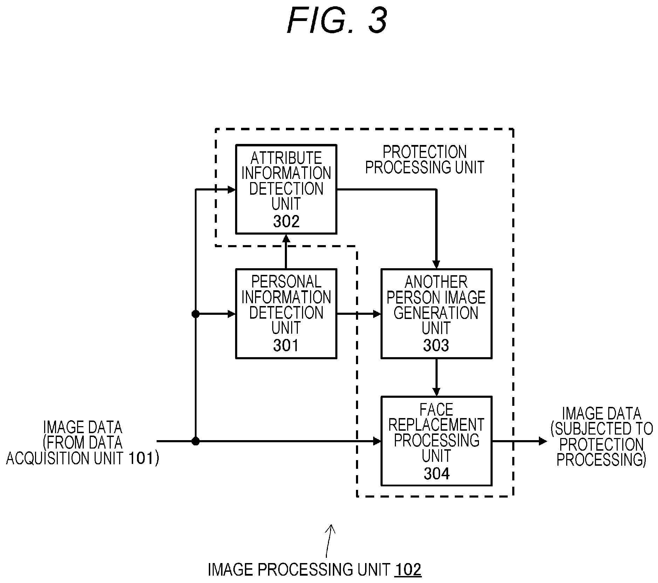

Fig. 3 illustrates another functional configuration example for performing processing of protecting the personal information portion included in the image data in the image processing unit 102. In the example illustrated in Fig. 3, the image processing unit 102 performs processing of replacing a person image in the image data with an appropriate another person image by a personal information detection unit 301, an attribute information detection unit 302, an another person image generation unit 303, and a face replacement processing unit 304. Note that the personal information detection unit 301 is similar to the personal information detection unit 201 in Fig. 2. The attribute information detection unit 302, the another person image generation unit 303, and the face replacement processing unit 304 correspond to the protection processing unit 202 in Fig. 2.

When the personal information detection unit 301 captures the image data acquired by the data acquisition unit 101, the personal information detection unit 301 detects personal information included in the image data. Specifically, the personal information detection unit 301 detects a face image included in the image data by face detection processing (same as above).

The attribute information detection unit 302 detects attribute information of the person image detected by the personal information detection unit 301. The attribute information mentioned here is race, gender, age, and the like. The attribute information may include various types of information such as occupation and hometown as necessary.

The another person image generation unit 303 generates an another person image having the same attribute information as the person image detected from the original image data detected by the personal information detection unit 301 on the basis of the attribute information detected by the attribute information detection unit 302. Then, the face replacement processing unit 304 performs conversion into image data that does not require to worry about the personal information by replacing the personal information included in the original image data with the another person image generated by the another person image generation unit 303.

As the processing for protecting the personal information included in the image data, processing of applying blindness, mosaic, or blurring to the face image in the image data may be performed. However, in such simple image processing, there arises a problem that attribute information such as race, gender, and age of the original person is missing and the data is not appropriate as learning data for deep learning. On the other hand, according to the image processing unit 102 illustrated in Fig. 3, the another person image generation unit 303 is configured to generate the another person image having the same attribute information as the person image included in the image data, and the face replacement processing unit 304 is configured to perform processing of replacing the person image in the original image data. In such a case, the information processing apparatus 100 can supply data for which personal information is protected while maintaining quality without losing the original attribute information, and the like, and thus, can provide the data to a third party as good learning data for deep learning, and can further distribute the data via the third party.

### B-4. Generation of Another Person Image

Next, processing of generating an another person image will be described.

In order to implement protection of personal information in the image data while maintaining data quality, the another person image generation unit 303 needs to generate an another person image whose authenticity cannot be determined from the original person image. To achieve this, in the present example, the another person image generation unit 303 generates the another person image using a generative adversarial network (GAN). The GAN is a method of unsupervised learning in which a generator and a discriminator each constituted by a neural network are caused to compete with each other to deepen learning of input data, and is used for generating non-existent data or converting data according to characteristics of existing data.

Specifically, the another person image generation unit 303 may artificially generate the another person image having the same attribute information as the person image by using StyleGAN2 (see, for example, Non-Patent Document 1) obtained by further improving StyleGAN that implements high-resolution image generation using Progressive Growing. Alternatively, the another person image generation unit 303 may artificially generate the another person image having the same attribute information as the person image by using a base model (described later).

### B-5. Processing Procedure

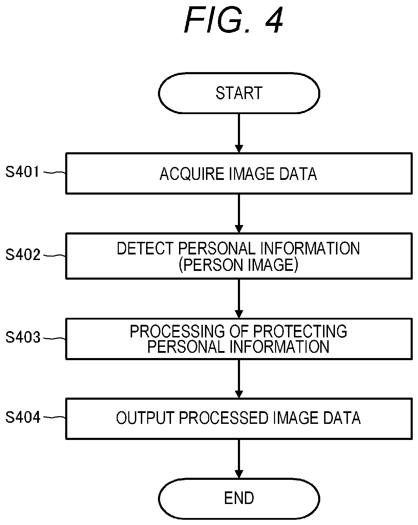

Fig. 4 indicates processing procedure for converting acquired or collected data into data for which personal information is protected and transmitting the data to a data server of a third party in the information processing apparatus 100 illustrated in Fig. 1 in the form of a flowchart. However, in the processing procedure indicated in Fig. 4, it is assumed that the image processing unit 102 has the functional configuration illustrated in Fig. 2.

First, the data acquisition unit 101 acquires image data to be used for deep learning using various means (step S401). For example, the data acquisition unit 101 may collect image data captured by digital cameras of a large number of users, or may search or go around a wide area network such as the Internet to collect image data that can be used for deep learning.

Next, in the image processing unit 102, the personal information detection unit 201 detects a person image as personal information included in the image data (step S402). Specifically, the personal information detection unit 201 detects a face image included in the image data by face detection processing.

Next, in the image processing unit 102, the protection processing unit 202 performs processing for protecting the personal information included in the image data (step S403). As the processing for protecting the personal information, processing of applying blindness, mosaic, or blurring to a face image in the image data may be performed, but there arises a problem that the data is not appropriate as learning data for deep learning due to information deterioration. Thus, the protection processing unit 202 performs face conversion processing of replacing the person image included in the image data with an another person image having the same attribute information as that of the person. In addition, the protection processing unit 202 may make it unnecessary to handle race information which is the personal information requiring special consideration by using skin color conversion processing of quantifying color of skin of a face portion.

Then, the data output unit 103 outputs the image data subjected to the image processing by the image processing unit 102, that is, the image data for which the personal information is protected to an apparatus outside the information processing apparatus 100 such as a data server of a third party (step S404), and ends the present processing.

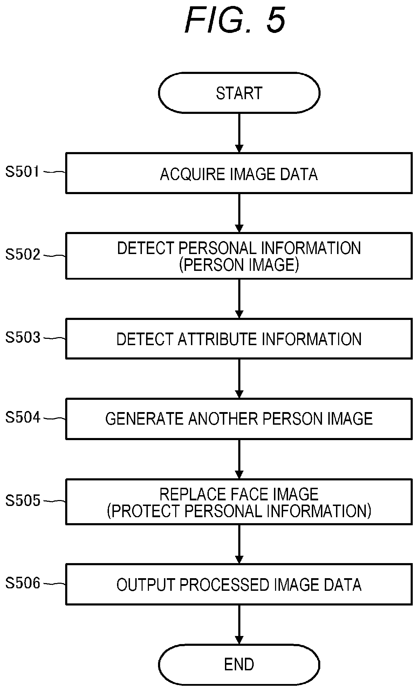

Fig. 5 indicates another processing procedure for converting acquired or collected data into data for which personal information is protected and transmitting the data to a data server of a third party in the information processing apparatus 100 illustrated in Fig. 1 in the form of a flowchart. However, in the processing procedure indicated in Fig. 5, it is assumed that the image processing unit 102 has the functional configuration illustrated in Fig. 3.

First, the data acquisition unit 101 acquires image data to be used for deep learning using various means (step S501). For example, the data acquisition unit 101 may collect image data captured by digital cameras of a large number of users, or may search or go around a wide area network such as the Internet to collect image data that can be used for deep learning.

Next, in the image processing unit 102, the personal information detection unit 301 detects a person image as personal information included in the image data (step S502). Specifically, the personal information detection unit 301 detects a face image included in the image data by face detection processing.

Next, in the image processing unit 102, the attribute information detection unit 302 detects attribute information of the person image detected by the personal information detection unit 301 (step S503). The attribute information detection unit 302 is, for example, race, gender, age, and the like of the person image. The attribute information detection unit 302 detects an occupation, a hometown, and the like, as necessary.

Then, in the image processing unit 102, the another person image generation unit 303 generates an another person image having the same attribute information as the person image detected from the original image data by the personal information detection unit 301 (step S504). The another person image generation unit 303 generates the another person image having the same attribute using the GAN or the base model.

Then, in the image processing unit 102, the face replacement processing unit 404 performs protection processing by replacing the personal information included in the original image data with the another person image generated by the another person image generation unit 303 (step S505).

Then, the data output unit 103 outputs the image data subjected to the image processing by the image processing unit 102, that is, the image data for which personal information is protected to an apparatus outside the information processing apparatus 100 such as a data server of a third party (step S506), and ends the present processing.

### C. Second Example

Although evolution of AI is remarkable, an ethical problem of AI has occurred. If learning is performed using learning data with a biased distribution, bias of AI occurs when learning is performed using the data with the biased distribution in a stage of collecting AI data. Thus, challenge lies in collecting unbiased and fair data. Broad sampling is required to construct unbiased and fair data sets. For example, if attention is focused on the attribute of "race", it is necessary to secure the same number of pieces of data for different races for each region. It is practically difficult to collect such data, and as a result, biased data sets are constructed.

Thus, in the second example of the present disclosure, in view of the fact that there is a limit to collection of diverse data, a technology for constructing diverse data sets by expanding data is proposed. Specifically, by using a base model which is AI that has acquired high generalization characteristics from a large amount and various kinds of data, an image is generated by an instruction being given with a language to construct fair data sets. The data automatically generated by the AI does not include personal information in the first place, and thus, it can be said that there is no risk of violating the Personal Information Protection Act even if the data is used for various purposes such as deep learning.

### C-1. Base Model

The base model is a machine learning model that can adapt to a large scale of and a wide range of downstream tasks that are trained on a large scale (typically by self-supervised learning) with a huge amount of unlabeled data. An early example of a base model was a large scale pre-trained language model, such as BERT and GPT-3, after which a plurality of multi-modal base models was developed, such as DALL-E, Flamingo and Florence. The base model can learn various kinds of data such as text, image, speech, structured data, and 3D signals and apply to various tasks such as question and answer, emotion analysis, information extraction, image capture, object recognition, and command following.

The base model may be constructed using, for example, a Transformer architecture. However, it should be understood that the base model is a cutting-edge technology at the time of this application and is not limited to the Transformer architecture, and may be configured using other existing architectures or architectures to be developed in the future.

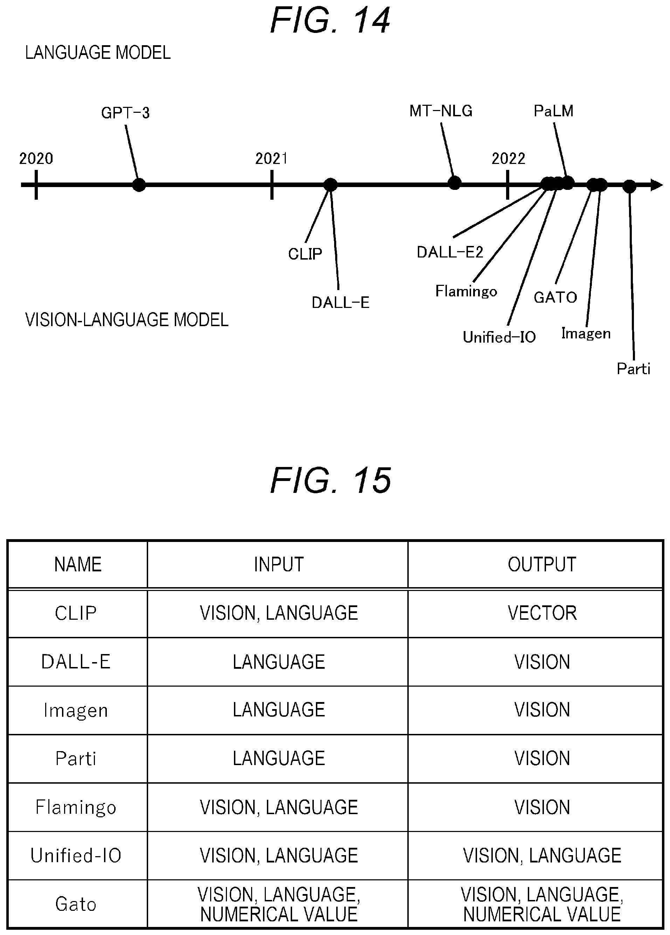

Fig. 14 indicates a representative base model after the GPT-3 on a time axis. However, an upper half in Fig. 14 is a language model, and a lower half is a vision-language model. In addition, Fig. 15 summarizes interfaces of each base model that handles vision and language. However, the "vision" referred to herein includes both a still image and a moving image. In the present example, an application that generates unbiased images as data sets by an instruction being given with a language is assumed.

In the present example, it is assumed that any one of the base models of DALL-E, Imagen, and Parti having "language" as an input and "vision" as an output is applied among the base models introduced in Fig. 15. Among them, the DALL-E is a version of 12 billion parameters of the GPT-3 trained to generate images from textual descriptions using data sets of text-image pairs, and has various functions such as creating anthropomorphic versions of animals and objects, combining irrelevant concepts in a likely manner, rendering text, and applying transformation to existing images.

### C-2. System Configuration

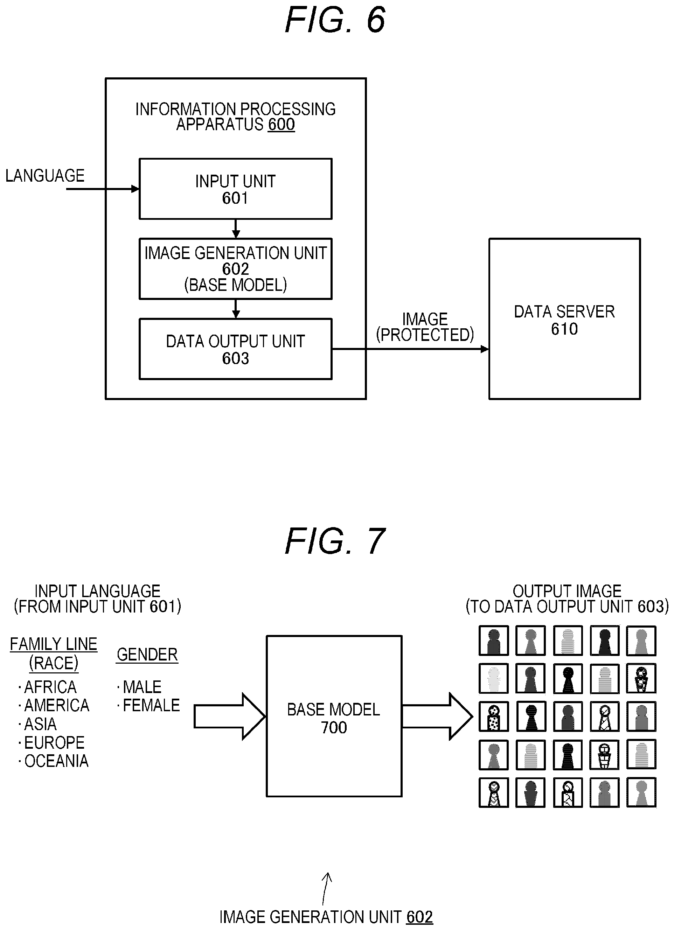

Fig. 6 illustrates a functional configuration of the information processing apparatus 600 according to the present example. The illustrated information processing apparatus 600 includes an input unit 601, an image generation unit 602, and a data output unit 603.

The input unit 601 inputs a language that gives an instruction to generate image data that is to be data sets for deep learning. For example, the input unit 601 may input language data as text via a keyboard or may input language data via a graphical user interface (GUI). Furthermore, the input unit 601 may input speech data uttered by the user and convert the speech data into text by speech recognition.

The image generation unit 602 automatically generates a large amount of image data that is to be data sets for deep learning as the instruction given with the language input via the input unit 601. As described above, the image generation unit 602 generates image data from the language by applying any one of the base models DALL-E, Imagen, and Parti. It is desirable that the base model to be applied to the image generation unit 602 has learned a predetermined law such as the Personal Information Protection Act. As a result, the image generation unit 602 can automatically generate a large amount of image data for which personal information is protected at the same time as removing the bias.

The data output unit 603 outputs the image data generated by the image generation unit 602 to an apparatus outside the information processing apparatus 600. For example, the data output unit 603 is managed or operated by a third party, and outputs the image data to the data server 610 that accumulates learning data for deep learning. Of course, the data output unit 603 may output the data to another data storage.

According to the information processing apparatus 600 according to the present example, by using the base model, it is possible to construct fair data sets by generating images by an instruction being given with a language. The data automatically generated by the base model does not include personal information in the first place, and thus, it can be said that there is no possibility of violating the Personal Information Protection Act even if the data is used for various purposes such as deep learning.

### C-3. Operation Example of Image Generation Unit

In this section C-3, an operation example for generating unbiased image data in the image generation unit 602 will be described.

Fig. 7 illustrates a first operation example of the image generation unit 602. In this operation example, it is assumed that a language that gives an instruction to generate male and female face images for each family line (race) is input via the input unit 601. In this case, a combination of each family line and gender is defined as one category. Then, the image generation unit 602 can construct unbiased data sets by generating the same number of pieces of image data in each category using the base model 700.

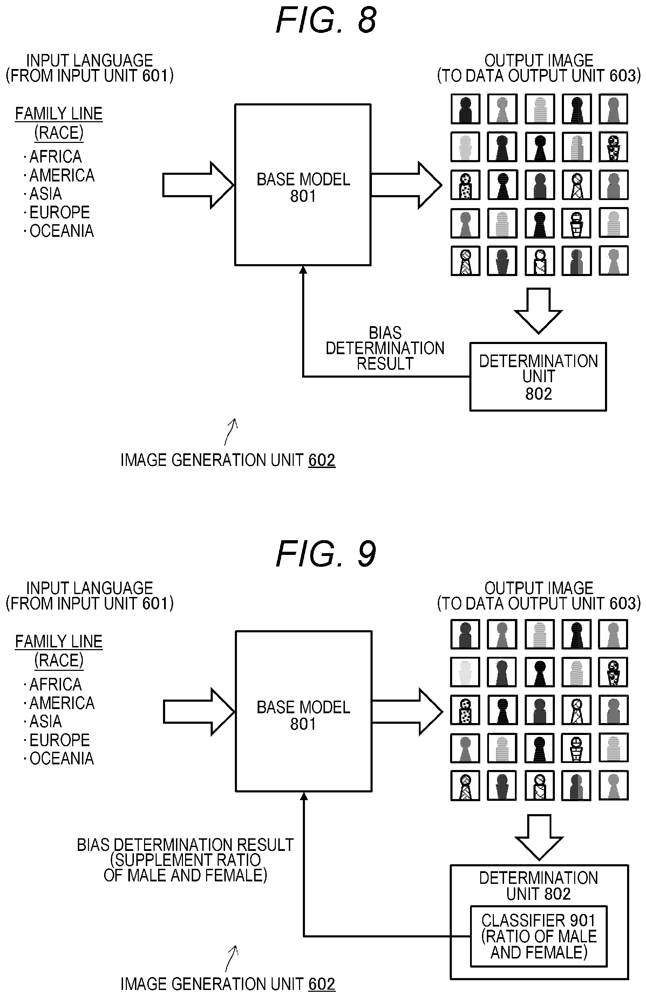

Fig. 8 illustrates a second operation example of the image generation unit 602. In this operation example, it is assumed that a language that gives an instruction to generate face images for each family line (race) is input via the input unit 601.

In this case, the image generation unit 602 generates image data of each category using the base model 801. Then, the determination unit 802 in the subsequent stage determines whether or not there is a bias between categories in the image data output from the base model 801. Then, in a case where the bias is detected, the determination unit 802 instructs the base model 801 to eliminate the bias by supplementing the number of pieces of data of the category for which the number of pieces of data is insufficient. The determination unit 802 may instruct the base model 801 to eliminate the bias with a language. On the other hand, the base model 801 can eliminate the bias by expanding the data of the category for which the number of pieces of data is insufficient.

Note that the determination unit 802 may notify the user of the bias determination result (for example, "African gender ratio is unbalanced", etc.) via a GUI screen, or the like, instead of directly feeding back the bias determination result to the base model 801. In this case, the user inputs, via the input unit 601, a language (for example, "expand image data of African female", etc.) for expanding the data of the category that is insufficient, and the base model 801 expands the data as instructed, thereby expanding the unbiased data sets.

For example, the determination unit 802 is implemented by preparing a classifier that classifies the image data generated by the base model 801 for each element (sensitive attribute) of the personal information that requires consideration.

Fig. 9 illustrates a second operation example of the image generation unit 602 in a case where an element of the personal information that requires consideration is only "gender". In this case, the determination unit 802 includes a classifier 901 that classifies the image data into male and female.

First, the image generation unit 602 generates image data of each category using the base model 801 (same as above). Next, the classifier 901 classifies the image data output from the base model 801 into the male and female for each family line and determines whether a ratio of the male and the female is balanced in each family line. Then, the classifier 901 instructs the base model 801 to expand the image data of the gender that is insufficient concerning the family line for which it has been detected that the ratio of male and female is unbalanced. On the other hand, the base model 801 can eliminate the bias of the data by expanding the data of the gender of the family line for which it has been instructed that the data is insufficient.

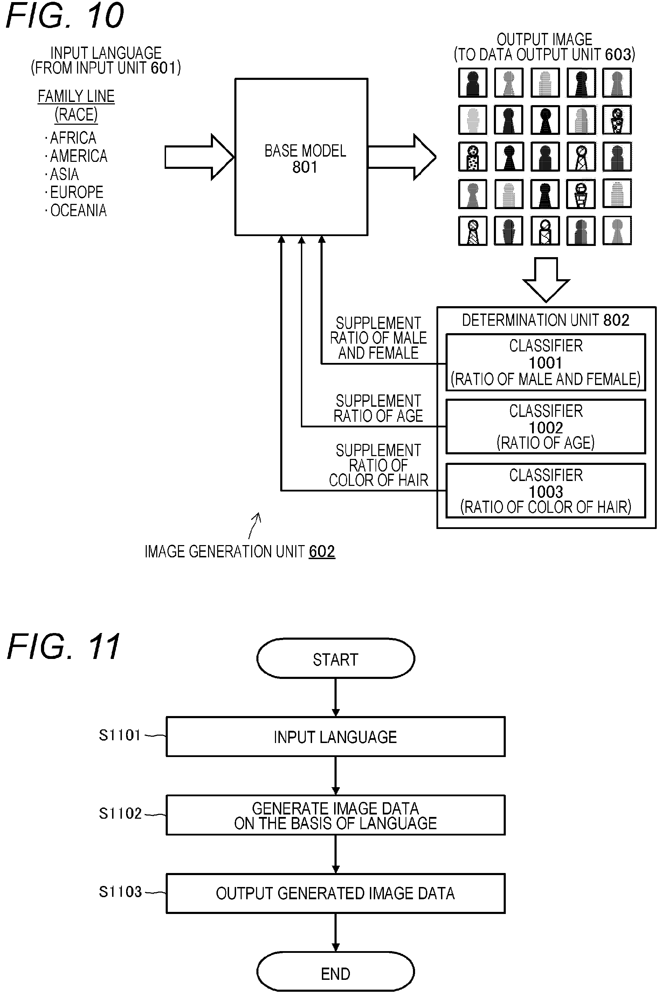

Fig. 10 illustrates a second operation example of the image generation unit 602 in a case where consideration is required for three elements of gender, age, and color of hair. In this case, the determination unit 802 includes a classifier 1001 that classifies the image data into male and female, a classifier 1002 that classifies the image data by age, and a classifier 1003 that classifies the image data by paper color.

First, the image generation unit 602 generates image data of each category using the base model 801 (same as above). Next, the classifier 1001 classifies the image data output from the base model 801 into male and female for each family line and determines whether a ratio of the male and the female is balanced in each family line. Then, the classifier 1001 instructs the base model 801 to expand the image data of the gender that is insufficient concerning the family line for which it has been detected that the ratio of male and female is unbalanced.

In addition, the classifier 1002 classifies the image data output from the base model 801 by age for each family line and determines whether a ratio of each age is balanced in each family line. Then, the classifier 1002 instructs the base model 801 to extend the image data of the age that is insufficient concerning the family line for which it has been detected that the ratio of each age is unbalanced.

In addition, the classifier 1003 classifies the image data output from the base model 801 by color of hair for each family line and determines whether a ratio of each color of the hair is balanced in each family line. Then, the classifier 1003 instructs the base model 801 to expand the image data of color of hair that is insufficient concerning the family line for which it has been detected that the ratio of each color of hair is unbalanced.

Then, the base model can eliminate the bias of the data by expanding the data with respect to the element for which it has been instructed that the data is insufficient from any of the classifiers 1001 to 1003.

Fig. 10 illustrates the second operation example of the image generation unit 602 in a case where consideration is required for three elements of gender, age, and color of hair. However, in a case where consideration is also required for other elements such as color of eye, scene, lighting, and angle, it is possible to obtain data sets for which the bias is eliminated for all the elements by adding a classifier for each element.

### C-4. Processing Procedure

Fig. 11 indicates processing procedure for giving an instruction with a language to generate images and transmitting the images to a data server of a third party by using the base model in the information processing apparatus 600 illustrated in Fig. 6 in the form of a flowchart. However, it is assumed that the image processing unit 602 has the functional configuration illustrated in Fig. 7.

First, the input unit 601 inputs a language that gives an instruction to generate image data that is to be data sets for deep learning (step S1101). For example, the input unit 601 may input language data as text via a keyboard or may input the language data via a GUI. Furthermore, the input unit 601 may input speech data uttered by the user and convert the speech data into text by speech recognition.

Next, the image generation unit 602 automatically generates a large amount of image data that is to be data sets for deep learning according to the language input in step S1101 by applying the base model (step S1102).

Then, the data output unit 603 outputs the image data subjected to the image processing by the image processing unit 102, that is, the image data for which personal information is protected to an apparatus outside the information processing apparatus 100 such as a data server of a third party (step S1103), and ends the present processing.

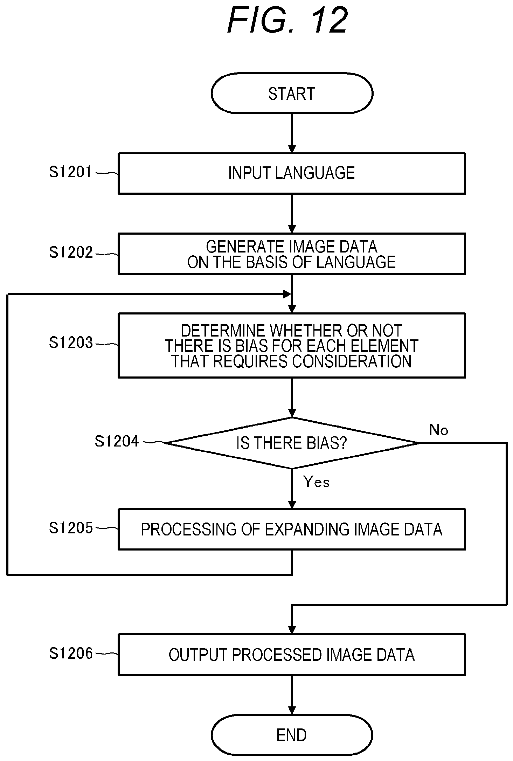

Fig. 12 indicates another processing procedure for generating images by an instruction being given with a language and transmitting the images to the data server of the third party by using the base model in the information processing apparatus 600 illustrated in Fig. 6 in the form of a flowchart. However, it is assumed that the image processing unit 602 has the functional configurations illustrated in Figs. 8 to 10.

First, the input unit 601 inputs a language that gives an instruction to generate image data that is to be data sets for deep learning (step S1201). For example, the input unit 601 may input language data as text via a keyboard or may input the language data via a GUI. Furthermore, the input unit 601 may input speech data uttered by the user and convert the speech data into text by speech recognition.

Next, the image generation unit 602 automatically generates a large amount of image data that is to be data sets for deep learning according to the language input in step S1101 by applying the base model (step S1202).

Next, the determination unit 802 determines whether or not there is a bias in the image data generated in step S1202 for each element of the personal information that requires consideration (step S1203). This bias determination processing is performed using a classifier prepared for each element of personal information that requires consideration. Each classifier classifies the generated image data by elements of interest (gender, age, hair color, etc.), and checks whether or not the ratio of each element in the image data is equal (step S1204) .

Here, in a case where it is determined that there is a bias in the image data for any of the elements (step S1204: Yes), the determination unit 802 outputs an instruction to the base model to supplement the insufficient elements with respect to the base model 801, and performs the expansion processing of the image data (step S1205). Thereafter, the processing returns to step S1203, and whether or not there is a bias in the image data is determined again.

Then, when there is no bias for all the elements of the personal information that requires consideration or when the bias can be eliminated (step S1204: No), the data output unit 603 outputs the image data subjected to the image processing by the image processing unit 102, that is, the image data for which personal information is protected to an apparatus outside the information processing apparatus 100 such as the data server 610 of the third party (step S1206), and ends the present processing.

### D. Third Example

Also in the third example of the present disclosure, similarly to the second example described above, a technology for constructing fair data sets by data expansion is proposed.

### D-1. System Configuration Example (1)

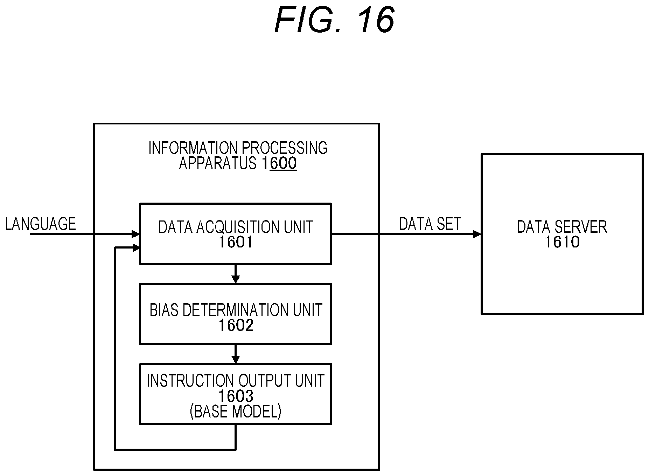

Fig. 16 illustrates a functional configuration example of the information processing apparatus 1600 according to the present example. The illustrated information processing apparatus 1600 includes a data acquisition unit 1601, a bias determination unit 1602, and an instruction output unit 1603.

The data acquisition unit 1601 acquires data that satisfies an instruction input in a format such as a language. The data acquisition unit 1601 mainly acquires image data serving as data sets for deep learning. The data acquisition unit 1601 outputs the acquired data sets to an apparatus outside the information processing apparatus 1600. For example, the data acquisition unit 1601 is managed or operated by a third party, and outputs image data to the data server 1610 that accumulates learning data for deep learning. Of course, the data acquisition unit 1601 may output the data to another data storage.

The data acquisition unit 1601 generates image data from the language by applying any one of the base models DALL-E, Imagen, and Parti. The base model to be applied to the data acquisition unit 1601 desirably has learned a predetermined law such as the Personal Information Protection Act. As a result, it can be expected that the data acquisition unit 1601 can automatically generate a large amount of image data for which personal information is protected while removing the bias as much as possible. However, the data acquisition unit 1601 is not necessarily limited to performing data acquisition by generating data by itself using a base model, or the like. For example, the data acquisition unit 1601 may be installed on a cloud to collect image data captured by a large number of digital cameras (not illustrated) as edge devices, or may search or go around a wide area network such as the Internet to collect image data according to an instruction.

The bias determination unit 1602 determines a bias regarding the data sets acquired by the data acquisition unit 1601. For example, the bias determination unit 1602 determines whether there is a bias between categories in the image data acquired by the data acquisition unit 1601 on the basis of predetermined definition of fairness. The bias determination unit 1602 may prepare a classifier that classifies the image data for each category to be determined (for example, each element of personal information that requires consideration), and determine the bias on the basis of an imbalance of the ratio of the number of pieces of image data classified by each classifier. Specifically, similarly to the determination unit 802 illustrated in Fig. 10, the bias determination unit 1602 may include a plurality of classifiers such as a classifier that classifies image data by gender, a classifier that classifies image data by age, a classifier that classifies image data by color of hair, a classifier that classifies image data by color of skin, and the like. Then, the bias determination unit 1602 calculates a ratio of the number of pieces of pixel data for each category such as a ratio of male and female, a ratio of age, a ratio of color of hair, and a ratio of color of skin for the image data acquired by the data acquisition unit 1601, and quantitatively evaluates the calculation result on the basis of the definition of fairness to determine the bias.

For your information, in the industry, Demographic parity, Equalized odds, Equal opportunity, and the like, are known as definitions of fairness. Demographic parity is definition of fairness in which the same predicted distribution should be used regardless of the category. For example, in human resources recruitment of companies, the definition of fairness is that a population ratio between adoption and non-adoption is the same regardless of "gender" or "race". Furthermore, Equalized odds is definition of fairness in which a ratio of a true positive rate (TPR) to a false positive rate (FPR) is the same regardless of the sensitive attribute. For example, in prediction as to whether or not an ex-convict will re-commit a crime, it is the criterion of fairness that a population ratio of the false positive rate (FPR) at which it was erroneously detected that the ex-convict would re-commit a crime even though he/she hasn't, to the true positive rate (TPR) at which it was predicted that the ex-convict would re-commit a crime and the ex-convict has actually re-committed a crime is the same regardless of "race". Furthermore, Equal opportunity is definition of fairness in which a population ratio of the true positive rate (TPR) is the same regardless of the sensitive attribute (however, the ratio of the FPR is not taken into consideration unlike Equalized odds). For example, in prediction as to whether or not a debtor of a loan discharges a debt, it is the criterion of fairness that a ratio of the true positive rate (TPR) at which it was predicted that the debt would be discharged and the debt has actually been discharged is the same regardless of "gender".

On the basis of the determination result of the bias determination unit 1602, the instruction output unit 1603 outputs at least one or both of an instruction regarding the bias and an instruction to generate data for alleviating the bias. The instruction output unit 1603 basically outputs an instruction with a language.

The instruction output unit 1603 outputs such an instruction to the data acquisition unit 1601. The data acquisition unit 1601 acquires data so as to alleviate the data bias on the basis of the instruction received from the instruction output unit 1603. Furthermore, the instruction output unit 1603 may output an instruction to an apparatus outside the information processing apparatus 1600.

The instruction output unit 1603 outputs an instruction regarding the bias and an instruction to generate data for alleviating the bias from the bias determination result using the learned base model. The learned base model to be applied to the instruction output unit 1603 uses a language as an output interface, and thus outputs an instruction with the language. By applying the learned base model to the instruction output unit 1603, it is possible to output an optimum prompt as the instruction regarding the bias or the instruction to generate data for alleviating the bias to the data acquisition unit 1601, or the like.

It is assumed that the learned base model to be applied to the instruction output unit 1603 has learned a predetermined law. Thus, the instruction output unit 1603 can output at least one or both of the instruction regarding the bias and the instruction to generate data for alleviating the bias according to the learned law. Specifically, it is assumed that the learned base model to be applied to the instruction output unit 1603 has learned the Personal Information Protection Act. In this case, the instruction output unit 1603 can output at least one or both of the instruction regarding the bias and the instruction to generate data for alleviating the bias so as not to violate the Personal Information Protection Act (or so as to remove a bias regarding an element of personal information that requires consideration).

Note that, in a case where the base model is also applied to the data acquisition unit 1601, the base model may be a model integrated with the learned base model to be applied to the instruction output unit 1603, or may be a model independent of each other.

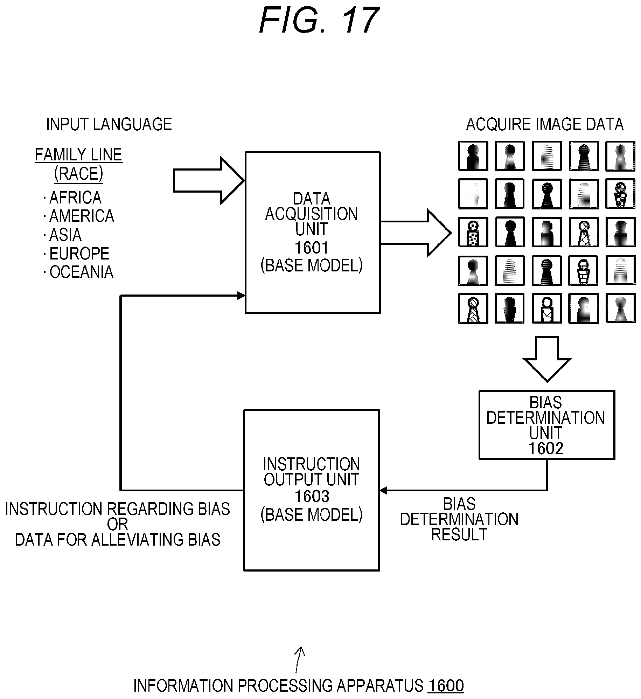

Fig. 17 illustrates an operation example of the information processing apparatus 1600. In this operation example, it is assumed that an instruction to generate face images for each family line (race) is input with a language, or the like, to the information processing apparatus 1600 and unbiased face images are collected.

Upon receiving an instruction to acquire face images for each family line (race), the data acquisition unit 1601 acquires image data of each category generated by the base model on the basis of the instruction.

Subsequently, the bias determination unit 1602 determines whether there is a bias between categories in the image data acquired by the data acquisition unit 1601. In a case where there is a plurality of elements of the personal information that requires consideration, such as gender, age, and color of hair, the bias determination unit 1602 uses a classifier for each element to check a balance of a ratio for each element of the acquired image data and determine whether or not there is a bias.

Subsequently, the instruction output unit 1603 outputs an instruction regarding the bias and an instruction to generate data for alleviating the bias from the bias determination result. By applying the learned base model to the instruction output unit 1603, it is possible to output an optimal prompt as the instruction regarding the bias or the instruction to generate data for alleviating the bias.

Then, the data acquisition unit 1601 acquires the image data generated by the base model again on the basis of the prompt output from the instruction output unit 1603. In this way, the information processing apparatus 1600 can collect the image data in which the bias between the categories is alleviated for each element of the personal information that requires consideration.

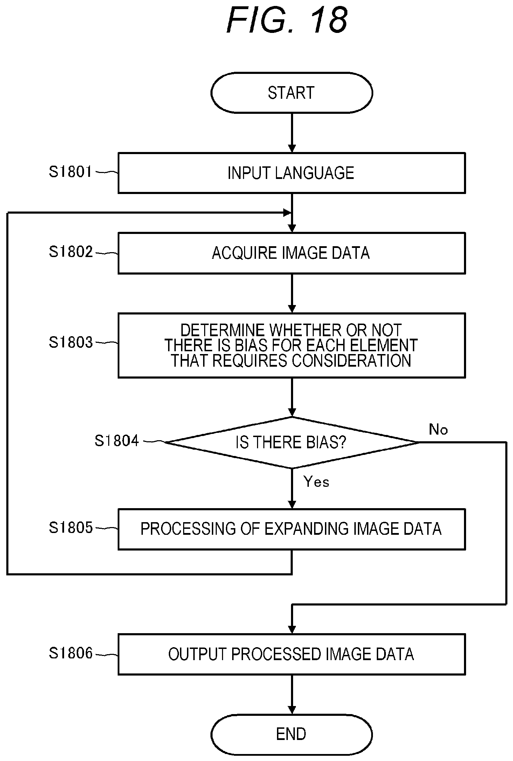

Fig. 18 indicates processing procedure for collecting data in the information processing apparatus 1600 in the form of a flowchart.

When the instruction is input in a format such as a language (step S1801), the data acquisition unit 1601 acquires a large amount of image data according to the instruction using the base model (step S1802).

Next, the bias determination unit 1602 determines whether or not there is a bias in the image data acquired in step S1802 for each element of personal information that requires consideration (step S1803). This bias determination processing is performed using a classifier prepared for each element of personal information that requires consideration. Each classifier classifies the generated image data by elements of interest (gender, age, color of hair, etc.), and checks whether or not the ratio of each element in the image data is equal (step S1804).

Here, in a case where it is determined that there is a bias in the image data for any element (step S1804: Yes), the bias determination unit 1602 outputs a determination result to the instruction output unit 1603. Then, the instruction output unit 1603 outputs an instruction regarding the bias and an instruction to generate data for alleviating the bias from the bias determination result (step S1805). By applying the learned base model to the instruction output unit 1603, it is possible to output an optimal prompt as the instruction regarding the bias or the instruction to generate data for alleviating the bias.

Thereafter, when the processing returns to step S1802, the data acquisition unit 1601 acquires the image data generated by the base model again on the basis of the prompt output from the instruction output unit 1603. In this way, the information processing apparatus 1600 can collect the image data in which the bias between the categories is alleviated for each element of the personal information that requires consideration.

Then, when there is no bias for all the elements of the personal information that requires consideration or when the bias can be eliminated (step S1804: No), the information processing apparatus 1600 outputs the collected image data to an apparatus outside the information processing apparatus 1600 such as the data server 1610 of a third party, for example (step S1806), and ends the present processing.

### D-2. System Configuration (2)

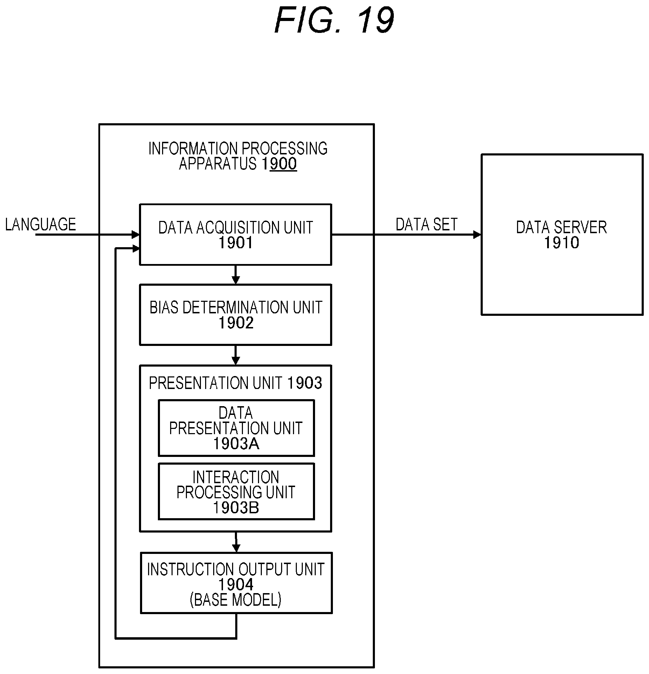

Fig. 19 illustrates a functional configuration example of the information processing apparatus 1900 according to the present example. The illustrated information 1900 includes a data acquisition unit 1901, a bias determination unit 1902, a presentation unit 1903, and an instruction output unit 1904.

The data acquisition unit 1901 acquires image data that satisfies the instruction input in a format such as a language and is mainly to be data sets for deep learning. The data acquisition unit 1901 generates image data from the language by applying any one of the base models DALL-E, Imagen, and Parti. The base model to be applied to the data acquisition unit 1901 desirably has learned a predetermined law such as the Personal Information Protection Act (the same as above). The data acquisition unit 1901 outputs the acquired data sets to an apparatus outside the information processing apparatus 1900 such as the data server 1910.

The bias determination unit 1902 determines a bias regarding the data sets acquired by the data acquisition unit 1901. For example, the bias determination unit 1902 determines whether or not there is a bias between categories in the image data acquired by the data acquisition unit 1901 on the basis of predetermined definition of fairness (described above). For example, the bias determination unit 1902 prepares a classifier that classifies image data for each category (for example, each element of personal information that requires consideration) to be determined, and quantitatively evaluates a calculation result of a ratio (such as a ratio of male and female, a ratio of age, a ratio of color of hair and a ratio of color of skin) for each category of the number of pieces of image data classified by each classifier on the basis of the definition of the fairness to determine the bias (same as above).

The presentation unit 1903 presents a determination result by the bias determination unit 1902 for the image acquired by the data acquisition unit 1901 to the user. The presentation unit 1903 includes a data display unit 1903A and an interaction processing unit 1903B. The data display unit 1903A presents data regarding the bias determination result by screen display, or the like. Furthermore, the interaction processing unit 1903B processes interaction with the user regarding the bias determination result.

The data display unit 1903A presents statistical and quantitative bias determination results calculated by the bias determination unit 1902 and a qualitative bias determination result to the user via, for example, a GUI screen. The statistical and quantitative bias determination results are a ratio (in the case of race, individual typology angle (ITA), which is an evaluation index of color of skin, and the like) of the number of pieces of data between categories for each element of personal information that requires consideration. In addition, the data display unit 1903A displays the images acquired by the data acquisition unit 1901 in a classified manner in response to a prompt input by the user via the interaction processing unit 1903B as the qualitative bias determination result. For example, the data display unit 1903A displays a result of classification based on a face feature amount designated by the user via the interaction processing unit 1903B. The data display unit 1903A displays the qualitative bias determination result in addition to the statistical and quantitative bias determination results, and thus, the user (human) easily intervenes through the interaction processing unit 1903B.

The instruction output unit 1904 acquires data for alleviating the bias or generates at least one or both of an instruction regarding the bias and an instruction to generate data for alleviating the bias on the basis of the response to the bias determination result from the user, and outputs the instruction to the data acquisition unit 1901. Furthermore, the instruction output unit 1904 may output an instruction to an apparatus outside the information processing apparatus 1900.

The instruction output unit 1904 outputs an instruction regarding the bias and an instruction for acquiring data for alleviating the bias on the basis of the response from the user using the learned base model. Furthermore, the instruction output unit 1904 may generate an instruction to acquire data using generated AI such as ChatGPT. It is also assumed that the user inputs an instruction sentence that is long and difficult to understand (or difficult to quantify) to the interaction processing unit 1903B. However, the instruction output unit 1904 can replace the instruction sentence with an optimal prompt appropriate for input to the computer by using the generated AI. In addition, it is assumed that the learned base model to be applied to the instruction output unit 1904 has learned a predetermined law (the same as above), and outputs an instruction for acquiring data according to the predetermined law. In a case where the base model is also applied to the data acquisition unit 1901, the base model may be a model integrated with the learned base model to be applied to the instruction output unit 1904, or may be a model independent from each other.

A main difference between the information processing apparatus 1900 and the information processing apparatus 1600 described in the above section D-1 is that the presentation unit 1903 that presents the bias determination results to the user and obtains the response from the user is provided. The presentation unit 1903 will be described in more detail.

The presentation unit 1903 causes the data display unit 1903A to perform display of a quantitative score (in the case of race, ITA, which is an evaluation index of color of skin, and the like) and qualitative display (display images themselves classified according to a prompt) for a portion where the image acquired by the data acquisition unit 1901 is presented to a human. With such a display method, a human can more easily intervene in the bias determination results through the interaction processing unit 1903B.

The method of adjusting the population ratio so that the ratios of races become equal is adapted to idea of fairness (Demographic parity) that the population ratios are equal. However, in practice, the ratios of races in the world are not constant, and making the ratios of races equal leads to a bias problem. The problem can be addressed also by performing adjustment to make the ratios match the actual population ratios on the basis of the statistical data. As an ethical problem, a majority of attributes have advantages in an actual society. As a problem of modern society, there is a problem that although there are many cases in which "utilitarianism" is adopted in which the purpose, obligation, and standard of conduct are sought for the greatest happiness of the largest majority of society, minorities are not respected. In summary, if a realistic society is used as data sets of AI as it is, a discriminatory problem of modern society is reproduced by AI. It is therefore considered that a human should select how to adjust the ratios of races depending on the purpose or application.

The information processing apparatus 1900 is configured such that the bias determination unit 1902 determines the ratios of races of the face images acquired by the data acquisition unit 1901, a result of the determination is displayed on the data display unit 1903A, and the user can further give an instruction to adjust the ratios of races through the interaction processing unit 1903B. In addition to the ratios of races, the ratio regarding other sensitive attributes such as a ratio of male and female and a ratio of age is not necessarily the same as ratios in the actual world, and may lead to a bias. In the information processing apparatus 1900, in such a complicated social structure, distortion of social elements can be resolved by human adjustment on a case-by-case basis. In such a complicated social structure, the information processing apparatus 1900 is a system that can know what ratio of the acquired image data to construct AI is good for each sensitive attribute such as race, gender, age, and color of hair by a human asking a question and answer through interaction to the base model that is a large-scale language model.

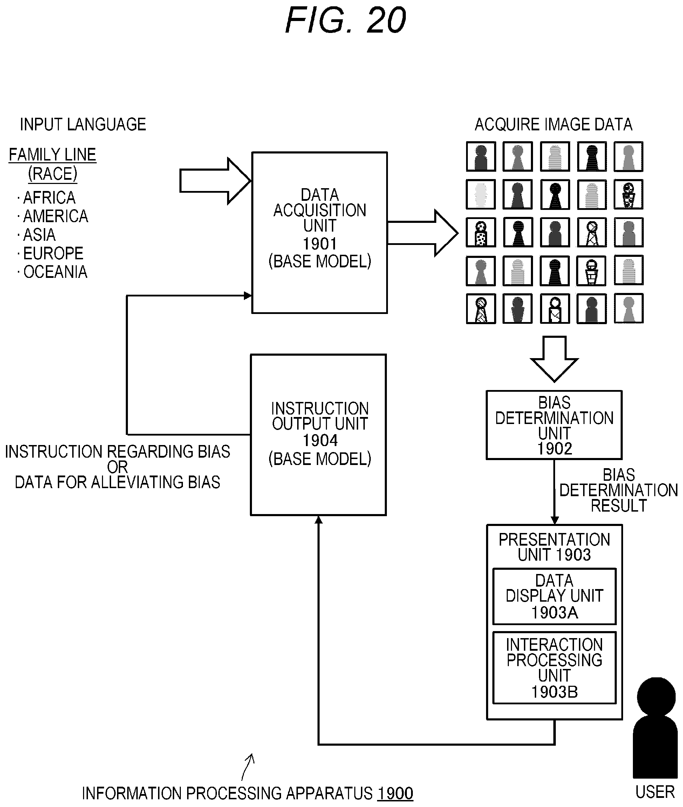

Fig. 20 illustrates an operation example of the information processing apparatus 1900. In this operation example, it is assumed that an instruction to generate face images for each family line (race) is input with a language, or the like, to the information processing apparatus 1900 and unbiased face images are collected.

Upon receiving an instruction to acquire face images for each family line (race), the data acquisition unit 1901 acquires image data of each category generated by the base model on the basis of the instruction.

Subsequently, the bias determination unit 1902 determines whether there is a bias between categories in the image data acquired by the data acquisition unit 1901. In a case where there is a plurality of elements of the personal information that requires consideration, such as gender, age, and color of hair, the bias determination unit 1902 uses a classifier for each element to check the balance of ratios for each element of the acquired image data and determine whether or not there is a bias.

Subsequently, in the presentation unit 1903, the data display unit 1903A presents statistical and quantitative bias determination results by the bias determination unit 1902 and a qualitative bias determination result to the user. Then, the interaction processing unit 1903B can receive a response or interaction from the user to the bias determination results through interaction with the user, or the like.

Subsequently, the instruction output unit 1904 outputs an instruction regarding the bias and an instruction to generate data for alleviating the bias on the basis of the response from the user using the learned base model. By applying the learned base model to the instruction output unit 1904, it is possible to output an optimal prompt as the instruction regarding the bias or the instruction to generate data for alleviating the bias.

Then, the data acquisition unit 1901 acquires the image data generated by the base model again on the basis of the prompt output from the instruction output unit 1904. In this way, the information processing apparatus 1900 can collect the image data in which the bias between the categories is alleviated for each element of the personal information that requires consideration.

General idea of fairness is to make ratios of the number of pieces of data obtained by classifying enormous image data acquired by the data acquisition unit 1901 by each sensitive attribute such as race, gender, age, and color of hair equivalent to the statistical and mathematical ratios in the actual world. However, such a simple bias alleviation method may lead to a bias and may fail to solve an ethical problem or a social problem. Thus, a human should select how to adjust the ratios of the number of pieces of data depending on the purpose or application. In the information processing apparatus 1900, in the presentation unit 1903, it is possible to know what kind of ratios of the number of pieces of data is used to construct AI by asking and answering a question about the statistical and quantitative bias determination results and the qualitative bias determination result presented by the data display unit 1903A with the base model through interaction via the interaction processing unit 1903B. Furthermore, in the information processing apparatus 1900, the instruction output unit 1904 can generate an optimal prompt for the base model for correcting the bias through the interaction with a human via the interaction processing unit 1903B and give the generated prompt to the data acquisition unit 1901. For example, a human may not be able to determine what kind of bias is present in a huge number of face image data sets such as hundreds of millions of face image data sets. In such a case, the human repeats a question regarding the bias with respect to the base model via the interaction processing unit 1903B, so that the base model summarizes or corrects the data sets so that the human can understand the bias. As a result, for example, in response to an instruction to acquire face images of a specific race, the data acquisition unit 1901 can acquire images whose backgrounds are not linked to the races or images with diverse face features. The information processing apparatus 1900 has a function of collecting data sets so that ratios of the data sets are equivalent to ratios in an actual world or statistical/mathematical ratios, and a function of adjusting the ratios of the number of pieces of data through interaction with a human through the base model, and can remove a bias remaining due to a complicated social structure according to a purpose.

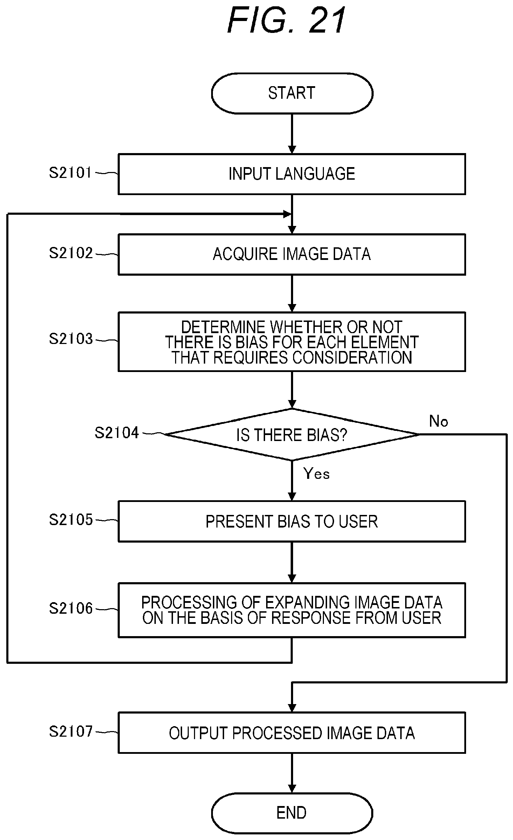

Fig. 21 indicates processing procedure for collecting data in the information processing apparatus 1900 in the form of a flowchart.

When the instruction is input in a format such as a language (step S2101), the data acquisition unit 1601 acquires a large amount of image data according to the instruction using the base model (step S2102).

Next, the bias determination unit 1902 determines whether or not there is a bias in the image data acquired in step S2102 for each element of the personal information that requires consideration (step S2103). This bias determination processing is performed using a classifier prepared for each element of personal information that requires consideration. Each classifier classifies the generated image data by elements of interest (such as gender, age and color of hair), and checks whether or not the ratio of each element in the image data is equal (step S2104).

Here, in a case where it is determined that there is a bias in the image data for any element (step S2104: Yes), the bias determination unit 1602 outputs the determination result to the presentation unit 2103. Then, in the presentation unit 1903, the data display unit 1903A presents the statistical and quantitative bias determination results calculated by the bias determination unit 1902 and the qualitative bias determination result to the user (step S2105). Furthermore, the interaction processing unit 1903B processes interaction with the user regarding the bias determination results.

Next, the instruction output unit 1904 outputs an instruction regarding the bias and an instruction to generate data for alleviating the bias on the basis of the response from the user (step S2106). By applying the learned base model to the instruction output unit 1904, it is possible to output an optimal prompt as the instruction regarding the bias or the instruction to generate data for alleviating the bias.

Thereafter, when the processing returns to step S2102, the data acquisition unit 1901 acquires the image data generated by the base model again on the basis of the prompt output from the instruction output unit 1603. In this way, the information processing apparatus 1900 can collect the image data in which the bias between the categories is appropriately alleviated for each element of the personal information that requires consideration.

Then, when there is no bias for all the elements of the personal information that requires consideration, or when the bias can be appropriately eliminated (step S2104: No), 1900 outputs the collected image data to an apparatus outside the information processing apparatus 1900 such as the data server 1610 of the third party, for example (step S2107), and ends the present processing.

### E. Configuration of Information Processing Apparatus

In this section D, a specific configuration of the information processing apparatus provided for implementation of the present disclosure will be described.

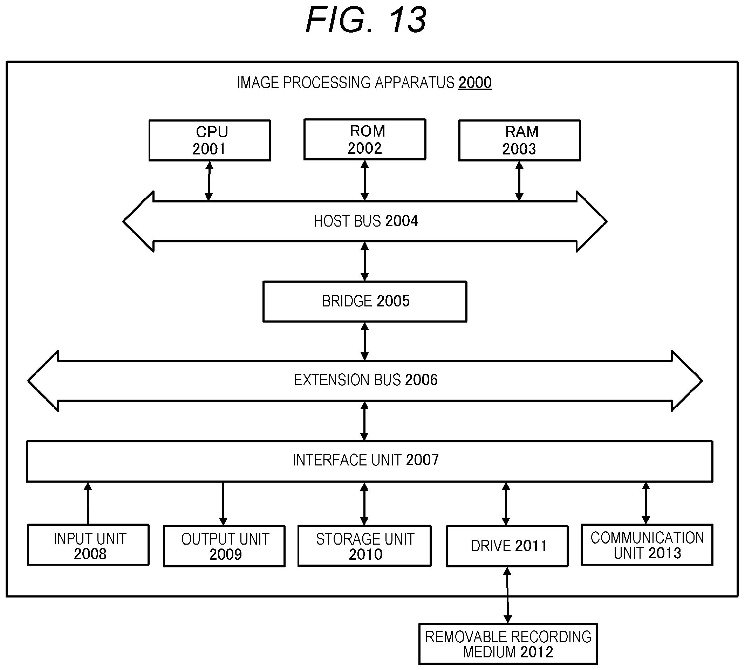

Fig. 13 illustrates a specific hardware configuration example of an information processing apparatus 2000. The information processing apparatus 2000 illustrated in Fig. 10 includes, for example, a PC, and the like. The information processing apparatus 2000 can operate as the information processing apparatus illustrated in Figs. 1, 6, and 16.

The information processing apparatus 2000 illustrated in Fig. 13 includes a CPU 2001, a read only memory (ROM) 2002, a random access memory (RAM) 2003, a host bus 2004, a bridge 2005, an extension bus 2006, an interface unit 2007, an input unit 2008, an output unit 2009, a storage unit 2010, a drive 2011, and a communication unit 2013.

The CPU 2001 functions as an arithmetic processing apparatus and a control apparatus, and controls the overall operation of the information processing apparatus 2000 according to various programs. The ROM 2002 stores programs (a basic input/output system, or the like) and calculation parameters to be used by the CPU 2001 in a non-volatile manner. The RAM 2003 is used to load a program to be used in execution of the CPU 2001 and temporarily store parameters such as work data that appropriately changes during program execution. Examples of the program to be loaded into the RAM 2003 and executed by the CPU 2001 include various application programs, an operating system (OS), and the like.

The CPU 2001, the ROM 2002, and the RAM 2003 are interconnected by the host bus 2004 including a CPU bus or the like. Then, the CPU 2001 operates in conjunction with the ROM 2002 and the RAM 2003 to execute various application programs under the execution environment provided by the OS, thereby enabling various functions and services to be implemented. In a case where the information processing apparatus 100 is a PC, the OS is, for example, Windows of Microsoft Corporation or Unix. In addition, the application program includes an application that executes processing for protecting personal information included in image data, an application that executes processing for generating another person image for protecting personal information, and an application that executes processing for automatically generating image data on the basis of an input language.

The host bus 2004 is connected to the extension bus 2006 via the bridge 2005. The extension bus 2006 is, for example, a peripheral component interconnect (PCI) bus or PCI Express, and the bridge 2005 is based on the PCI standard. However, the information processing apparatus 2000 does not necessarily have a configuration in which circuit components are separated by the host bus 2004, the bridge 2005, and the extension bus 2006, and thus may be configured in such a way that almost all circuit components are implemented by being interconnected using a single bus (not illustrated).

The interface unit 2007 connects peripheral apparatuses such as the input unit 2008, the output unit 2009, the storage unit 2010, the drive 2011, and the communication unit 2013 according to the standard of the extension bus 2006. However, all of the peripheral apparatuses illustrated in Fig. 13 are not necessarily essential, and the information processing apparatus 2000 may further include a peripheral apparatus (not illustrated). Furthermore, the peripheral apparatus may be built in the main body of the information processing apparatus 2000, or some peripheral apparatuses may be externally connected to the main body of the information processing apparatus 2000.

The input unit 2008 includes an input control circuit that generates an input signal on the basis of an input from a user and outputs the input signal to the CPU 2001, and the like. As in the present embodiment, in a case where processing of generating images from a language using the base model is performed on the information processing apparatus 2000, the input unit 2008 may include an apparatus capable of inputting language data such as a keyboard, a mouse, a touch panel, or a microphone. The output unit 2009 includes, for example, a display apparatus such as a liquid crystal display (LCD) apparatus, an organic electro-luminescence (EL) display apparatus, and a light emitting diode (LED).

The storage unit 2010 stores files such as programs (application, OS, or the like) to be executed by the CPU 2001 and various pieces of data. The storage unit 2010 may, for example, accumulate a number of pieces of data for which multivariable analysis is to be performed as a function as a data accumulation unit 801. Although the storage unit 2010 includes, for example, a mass storage apparatus such as a solid state drive (SSD) or a hard disk drive (HDD), the storage unit 2010 may include an external storage apparatus.

A removable recording medium 2012 is a cartridge-type recording medium such as a microSD card, for example. The drive 2011 performs read and write operations on the loaded removable recording medium 2013. The drive 2011 outputs data read from the removable recording medium 2012 to the RAM 2003 and the storage unit 2010, and writes data on the RAM 2003 and the storage unit 2010 to the removable recording medium 2012.

The communication unit 2013 is a device that performs wireless communication such as Wi-Fi (registered trademark), Bluetooth (registered trademark), or a cellular communication network such as 4G or 5G. Furthermore, the communication unit 2013 may include a terminal such as a universal serial bus (USB) or a high-definition multimedia interface (HDMI (registered trademark)), and may further include a function of performing data communication with a USB device such as a scanner or a printer, a display, or the like.

### INDUSTRIAL APPLICABILITY

The present disclosure has been described in detail with reference to the specific embodiments. However, it is obvious that those skilled in the art can make modifications and substitutions of the embodiment without departing from the gist of the present disclosure.

According to the present disclosure, it is possible to provide data that can be distributed without worrying about personal information. The present disclosure can be applied to collect data to be mainly used for deep learning, but the gist of the present disclosure is not limited thereto. The data provided by the present disclosure can be used in a variety of applications other than deep learning.

In short, the present disclosure has been described in an illustrative manner, and the content disclosed in the present specification should not be interpreted in a limited manner. To determine the gist of the present disclosure, the claims should be taken into consideration.

Note that the present disclosure may also have the following configurations.

(1) An information processing apparatus including:
   a data acquisition unit that acquires data;
   a bias determination unit that detects a bias regarding a data set acquired by the data acquisition unit; and
   a learned base model that outputs an instruction regarding the bias or outputs an instruction to generate data for alleviating the bias on the basis of a determination result of the bias determination unit.
(2) The information processing apparatus according to (1), in which
   the instruction regarding the bias is an instruction by a language.
(3) The information processing apparatus according to (2), in which
   the base model acquires the data for alleviating the bias or outputs the instruction to generate the data for alleviating the bias on the basis of a response from a user to the instruction regarding the bias.
(4) The information processing apparatus according to (3), in which
   the base model acquires the data for alleviating the bias or changes the instruction to generate the data regarding the bias on the basis of interaction with the user.
(5) The information processing apparatus according to (1), in which
   the base model has learned a predetermined law, and the data for alleviating the bias is acquired or the instruction to generate the data for alleviating the bias is output on the basis of the learned law.
(6) The information processing apparatus according to (5), in which
   the predetermined law is the Personal Information Protection Act.
(7) The information processing apparatus according to (1), in which
   the data acquisition unit acquires image data, and
   the base model outputs an instruction regarding color of skin of a face image included in image data or outputs an instruction to generate image data obtained by converting color of skin of a face image included in face image data.
(8) The information processing apparatus according to (1), in which
   the data acquisition unit acquires a language, and
   the base model generates image data instructed with the language or outputs an instruction to generate image data instructed with the language.
(9) The information processing apparatus according to (8), in which
   the bias determination unit detects a bias in the image data generated by the base model.
(10) The information processing apparatus according to (9), in which
   the bias determination unit detects a bias for each element of personal information that requires consideration.
(11) The information processing apparatus according to (9), in which
   the base model further performs processing of supplementing image data on the basis of a bias determination result by the bias determination unit.
(12) An information processing method including:
   a data acquisition step of acquiring data;
   a bias determination step of detecting a bias regarding a data set acquired in the data acquisition step; and
   a step of outputting an instruction regarding the bias or outputting an instruction to generate data for alleviating the bias by using a learned base model on the basis of a determination result in the bias determination step.
(13) A computer program described in a computer-readable format such that a computer functions as:
   a data acquisition unit that acquires data;
   a bias determination unit that detects a bias regarding a data set acquired by the data acquisition unit; and
   an output unit that outputs an instruction regarding the bias or outputs an instruction to generate data for alleviating the bias by using a learned base model on the basis of a determination result of the bias determination unit.
(21) An information processing apparatus including: an input unit; and a processing unit that performs processing of generating an image for which personal information is protected on the basis of data input by the input unit.
(22) The information processing apparatus according to (21), in which
   the input unit inputs image data, and
   the processing unit performs processing for protecting personal information included in image data.
(23) The information processing apparatus according to (22), in which the processing unit performs processing of replacing a face image included in image data with an another person image.
(24) The information processing apparatus according to (23), in which the processing unit generates an another person image using a learned model.
(25) The information processing apparatus according to any one of (22) to (24), in which the processing unit performs processing of converting color of skin of a face image included in image data.
(26) The information processing apparatus according to (21), in which
   the input unit inputs a language, and
   the processing unit generates image data instructed with the language.
(27) The information processing apparatus according to (26), in which the processing unit generates image data using a base model.
(28) The information processing apparatus according to (27), in which the processing unit detects a bias in the image data generated by the base model.
(29) The information processing apparatus according to (28), in which the processing unit detects a bias for each element of personal information that requires consideration.
(30) The information processing apparatus according to any one of (28) or (29), in which the processing unit further performs processing of supplementing image data on the basis of a bias detection result.
(31) An information processing method including:
   an input step; and
   a processing step of performing processing of generating an image in which personal information is protected on the basis of data input in the input step.
(32) A computer program described in a computer-readable format such that a computer functions as:
   an input unit; and
   a processing unit that performs processing of generating an image in which personal information is protected on the basis of data input by the input unit.

### REFERENCE SIGNS LIST

- 100: Information processing apparatus
- 101: Data acquisition unit
- 102: Image processing unit
- 103: Data output unit
- 110: Data server
- 201: Personal information detection unit
- 202: Protection processing unit
- 301: Personal information detection unit
- 302: Attribute information detection unit
- 303: Another person image generation unit
- 304: Face replacement processing unit
- 600: Information processing apparatus
- 601: Input unit
- 602: Image generation unit
- 603: Data output unit
- 610: Data server
- 700: Base model
- 801: Base model
- 802: Determination unit
- 901: Classifier
- 1001 to 1003: Classifier
- 1600: Information processing apparatus
- 1601: Data acquisition unit
- 1602: Bias determination unit
- 1603: Instruction output unit
- 1900: Information processing apparatus
- 1901: Data acquisition unit
- 1902: Bias determination unit
- 1903: Presentation unit
- 1903A: Data display unit
- 1903B: Interaction processing unit
- 1904: Instruction output unit
- 2000: Information processing apparatus
- 2001: CPU
- 2002: ROM
- 2003: RAM
- 2004: Host bus
- 2005: Bridge
- 2006: Extension bus
- 2007: Interface unit
- 2008: Input unit
- 2009: Output unit
- 2010: Storage unit
- 2011: Drive
- 2012: Removable recording medium
- 2013: Communication unit

## Claims

1. An information processing apparatus comprising:
a data acquisition unit that acquires data;
a bias determination unit that detects a bias regarding a data set acquired by the data acquisition unit; and
a learned base model that outputs an instruction regarding the bias or outputs an instruction to generate data for alleviating the bias on a basis of a determination result of the bias determination unit.

2. The information processing apparatus according to claim 1, wherein
the instruction regarding the bias is an instruction by a language.

3. The information processing apparatus according to claim 2, wherein
the base model acquires the data for alleviating the bias or outputs the instruction to generate the data for alleviating the bias on a basis of a response from a user to the instruction regarding the bias.

4. The information processing apparatus according to claim 3, wherein
the base model acquires the data for alleviating the bias or changes the instruction to generate the data regarding the bias on a basis of interaction with the user.

5. The information processing apparatus according to claim 1, wherein
the base model has learned a predetermined law, and the data for alleviating the bias is acquired or the instruction to generate the data for alleviating the bias is output on a basis of the learned law.

6. The information processing apparatus according to claim 5, wherein
the predetermined law is the Personal Information Protection Act.

7. The information processing apparatus according to claim 1, wherein
the data acquisition unit acquires image data, and
the base model outputs an instruction regarding color of skin of a face image included in image data, or outputs an instruction to generate image data obtained by converting color of skin of a face image included in face image data.

8. The information processing apparatus according to claim 1, wherein
the data acquisition unit acquires a language, and
the base model generates image data instructed with the language or outputs an instruction to generate image data instructed with the language.

9. The information processing apparatus according to claim 8, wherein
the bias determination unit detects a bias in the image data generated by the base model.

10. The information processing apparatus according to claim 9, wherein
the bias determination unit detects a bias for each element of personal information that requires consideration.

11. The information processing apparatus according to claim 9, wherein
the base model further performs processing of supplementing image data on a basis of a bias determination result by the bias determination unit.

12. An information processing method comprising:
a data acquisition step of acquiring data;
a bias determination step of detecting a bias regarding a data set acquired in the data acquisition step; and
a step of outputting an instruction regarding the bias or outputting an instruction to generate data for alleviating the bias by using a learned base model on a basis of a determination result in the bias determination step.

13. A computer program described in a computer-readable format such that a computer functions as:
a data acquisition unit that acquires data;
a bias determination unit that detects a bias regarding a data set acquired by the data acquisition unit; and
an output unit that outputs an instruction regarding the bias or outputs an instruction to generate data for alleviating the bias by using a learned base model on a basis of a determination result of the bias determination unit.
